# EUROPÄISCHE PATENTSCHRIFT

(11) **EP 3 037 218 B1**
(45) Veröffentlichungstag und Bekanntmachung des Hinweises auf die Patenterteilung: **03.04.2019**
(21) Anmeldenummer: 15189678.4
(22) Anmeldetag: 14.10.2015
(51) Int. Cl.: B25F 5/00, B21J 15/10, B21J 15/28, B25B 27/00

(54) **WERKZEUG UND VERFAHREN ZUR BEHANDLUNG EINES WERKSTÜCKS MIT EINEM WERKZEUGELEMENT EINES WERKZEUGS**
TOOL AND METHOD FOR TREATING A WORKPIECE WITH A TOOL ELEMENT OF A TOOL
OUTIL ET PROCÉDÉ DE TRAITEMENT D'UNE PIÈCE AYANT UN ÉLÉMENT D'OUTIL

(30) Priorität: 17.12.2014 DE 102014226162
(43) Veröffentlichungstag der Anmeldung: 29.06.2016
(73) Patentinhaber: ROBERT BOSCH GMBH, 70442 Stuttgart (DE)
(72) Erfinder: Zurawski, Manfred, 74417 Gschwend (DE); Scharfenberg, Andreas, 71540 Murrhardt (DE)
(74) Vertreter: Thürer, Andreas

(56) Entgegenhaltungen:
- WO-A2-2012/025521
- DE-A1-102010 034 151

## Beschreibung

Die vorliegende Erfindung bezieht sich auf ein Werkzeug und ein Verfahren zur Behandlung eines Werkstücks mit einem Werkzeugelement eines Werkzeugs.

In Fertigungsanlagen, wie Fertigungsstraßen für Fahrzeuge, insbesondere Kraftfahrzeuge, Flugzeuge, usw., Einrichtungsgegenstände usw., werden oft Werkzeuge eingesetzt, welche Werkstücke behandeln. Solche Werkzeuge sind beispielsweise Nietwerkzeuge oder Schraubwerkzeuge oder Bohrwerkzeuge, Stanzwerkzeuge, usw. Ein solches Werkzeug verbindet dabei beispielsweise zwei Enden eines Werkstücks oder zwei oder mehr Werkstücke miteinander mit einem Niet oder einer Schraube. Oder mit dem Werkzeug wird eine Öffnung in das Werkstück gebohrt oder gestanzt.

DE 10 2010 034 151 A1 zeigt ein System zur Ermittlung der Position und/oder der Lage eines an einer Werkzeugaufnahme geführten Werkzeugs in einem Raum. WO 2012 025521 A2 zeigt ein Gerät zum Setzen von Blindnieten, das eine motorisch betätigte Zugeinrichtung zum Ziehen an dem Nietdorn aufweist.

Bei der Serienproduktion in den Fertigungsanlagen wird zum einen ein Vorgang häufig wiederkehrend ausgeführt, oft bei jedem der zu produzierenden Gegenstände. Zudem ist es zur Haltbarkeit der eingesetzten Werkzeuge hierbei erforderlich, dass die Behandlung der Werkstücke mit den Werkzeugen auf eine vorbestimmte Art und Weise ausgeführt wird.

Insbesondere wird bei einem Blindnietsetzgerät nach einem Vernieten eines Niets an einem oder mehr Werkstücken ein Nietdorn abgerissen, der sicher in einen Nietdornbehälter abzuführen ist. Beispielsweise ist es hierfür möglich, das Blindnietsetzgerät nach jedem Nietvorgang nach hinten zu kippen, damit der abgerissene Nietdorn durch die Schwerkraft nach hinten in den Nietdornbehälter geführt wird. Wird das Blindnietsetzgerät jedoch nicht nach jedem Nietvorgang nach hinten gekippt, kann es in dem Blindnietsetzgerät zu einem Nietdornstau kommen, wodurch das Blindnietsetzgerät ausfällt und gewartet werden muss.

Daher ist es Aufgabe der vorliegenden Erfindung, ein Werkzeug und ein Verfahren zur Behandlung eines Werkstücks mit einem Werkzeugelement eines Werkzeugs bereitzustellen, mit welchen die zuvor genannten Probleme gelöst werden können. Insbesondere sollen ein Werkzeug und ein Verfahren zur Behandlung eines Werkstücks mit einem Werkzeugelement eines Werkzeugs bereitgestellt werden, bei welchen ein Ausfall des Werkzeugs verhindert und die Haltbarkeit des Werkzeugs erhöht wird.

Diese Aufgabe wird durch ein Werkzeug nach Patentanspruch 1 gelöst.

Vorteilhafte weitere Ausgestaltungen des Werkzeugs sind in den abhängigen Patentansprüchen angegeben.

Mit dem Werkzeug ist es möglich, ein gezieltes Kippen des Werkzeugs, insbesondere nach hinten, und/oder ein Drehen des Werkzeugs in eine vorbestimmte Richtung und um einen vorbestimmten Drehwinkel zu detektieren. Damit kann eine sichere Abfuhr eines Nietdorns, der von einem in das Werkstück gesetzten Niet abgerissen ist, in einen Nietdornbehälter garantiert werden. Ähnliches ist beispielsweise bei einem Stanzwerkzeug oder einem anderen Werkzeug anwendbar. Bei Nichtbeachtung dieser Vorgehensweise durch einen Benutzer des Werkzeugs wird verhindert, dass von dem Benutzer ein neuer Nietvorgang gestartet wird. Somit stellt das Werkzeug sicher, dass jeder Nietdorn einzeln in den Nietdornbehälter transportiert wird. Damit kann ein Nietdornstau im Werkzeug sicher verhindert werden.

Das Werkzeug ermöglicht somit, einen Ausfall des Werkzeugs aufgrund eines Nietdornstaus im Werkzeug zu verhindern. Dadurch wird eine Wartung des Werkzeugs aufgrund eines Nietdornstaus im Werkzeug vermieden, wodurch insgesamt die Haltbarkeit des zuvor beschriebenen Werkzeugs deutlich verbessert wird.

Die Aufgabe wird zudem durch ein Verfahren zur Behandlung eines Werkstücks mit einem Werkzeugelement eines Werkzeugs nach Patentanspruch 9 gelöst.

Das Verfahren erzielt die gleichen Vorteile, wie sie zuvor in Bezug auf das Werkzeug genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Nachfolgend ist die Erfindung unter Bezugnahme auf die beiliegende Zeichnung und anhand von Ausführungsbeispielen näher beschrieben. Es zeigen:
Fig. 1 eine vereinfachte Ansicht einer Fertigungsanlage mit einem Werkzeug gemäß einem ersten Ausführungsbeispiel;
Fig. 2 eine vereinfachte Ansicht eines Werkzeugs gemäß dem ersten Ausführungsbeispiel; und
Fig. 3 eine vereinfachte Ansicht eines Werkzeugs gemäß einem zweiten Ausführungsbeispiel.

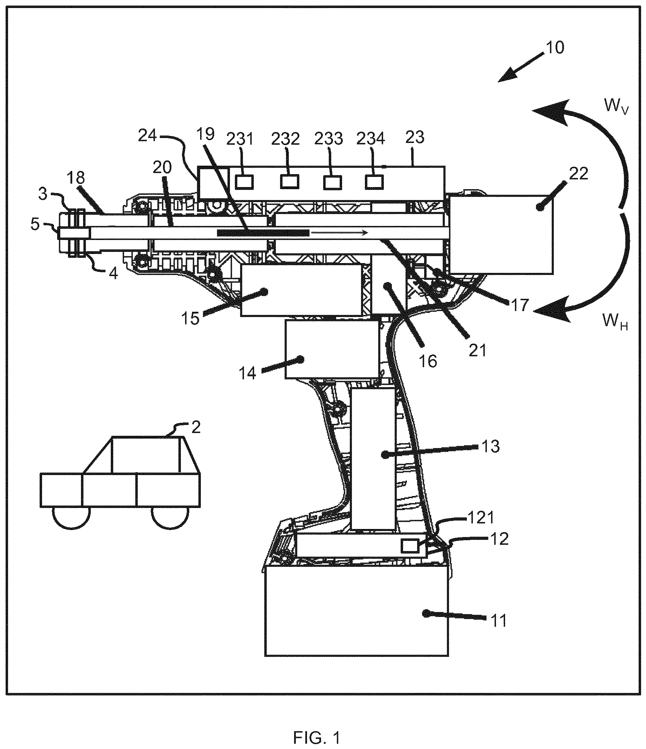

Fig. 1 zeigt sehr schematisch eine Fertigungsanlage 1 zur Fertigung von Gegenständen 2, wobei ein Werkzeug 10 zum Behandeln von Werkstücken 3, 4 beispielsweise zum Setzen von Nieten 5, insbesondere Blindnieten, eingesetzt wird. Die Werkstücke 3, 4 können beispielsweise Karosserieteile eines Fahrzeugs als Gegenstand 2 sein, wobei die Werkstücke 3, 4 mit den Nieten 5 verbunden werden. Hierbei kann das Werkzeug 10 beispielsweise zwei Enden des Werkstücks 3 verbinden oder die Werkstücke 3, 4 oder noch weitere nicht dargestellte Werkstücke miteinander mit einem Niet 5 verbinden. Das Werkzeug 10 ist bei diesem Beispiel also ein Nietwerkzeug und insbesondere ein Blindnietsetzgerät.

Das Werkzeug 10 hat eine Stromversorgung 11, eine Stromversorgungsschnittstelle 12 mit Leistungselektronik 121, einen Kabelbaum 13, einen Startschalter 14, eine Antriebseinrichtung 15, ein Getriebe 16, insbesondere mit Versatz, einen Wegesensor 17, ein Mundstück als Werkzeugelement 18 zur Aufnahme eines Befestigungselements 5, 19, einen Kraftsensor 20 mit Durchführung für einen Abschnitt 19 des Befestigungselements 5, 19, eine Trapez- oder Kugelumlaufspindel 21 mit Durchführung für den Abschnitt 19 des Befestigungselements 5, 19, einen Behälter 22, der insbesondere ein Nietdornbehälter ist, eine Steuereinrichtung 23, und eine Eingabeeinrichtung 24. Bei der Steuereinrichtung 23 sind ein Kommunikationsmodul 231, eine Erfassungseinrichtung 232 und eine Anzeigeeinrichtung 233, wie beispielsweise ein Display, vorgesehen.

In der Steuereinrichtung 23 ist ein Wert für einen vorbestimmten Drehwinkel 234 gespeichert. Der vorbestimmte Drehwinkel 234 ist ein Drehwinkel, um welchen das Werkzeug 10 ausgehend von seiner Position beim Nietvorgang, also einer Behandlung des Werkzeugs 10, im Raum angeordnet ist, nachdem eine Behandlung des Werkstücks 3, 4 mit dem Werkzeugelement 18 ausgeführt wurde, damit ein Bewegen des Abschnitts 19 des Befestigungselements 5, 19 in den Behälter 22 sichergestellt wird. Die Steuereinrichtung 23 kann als Steuerelektronik ausgeführt sein. Die Erfassungseinrichtung 232 ist insbesondere in die Steuereinrichtung 23 integriert.

Bei dem Werkzeug 10 kann die Stromversorgung 11 über ein Netzteil oder mittels einer Batterie, insbesondere einer nicht wieder aufladbaren oder wieder aufladbaren Batterie (Akkumulator) realisiert sein. In dem Werkzeugelement 18 wird bei dem Werkzeug 10 als Beispiel als Befestigungselement 5, 19 ein Niet 5 mit Nietdorn verwendet. Der Nietdorn wird nach dem Setzen des Niets 5, also einer Behandlung des Werkstücks 3, 4 mit dem Werkzeugelement 18 abgerissen.

Wie bereits zuvor beschrieben, können mit dem Werkzeug 10 insbesondere Karosserieteile der Fahrzeuge als Gegenstände 2 vernietet werden. Hierfür wird das Werkzeug 10 mit dem Niet 5 möglichst senkrecht an das oder die Werkstücke 3, 4 angeordnet, wie in Fig. 1 gezeigt. Hierbei kann das Werkzeug 10 auch von oben, von unten oder seitlich an das oder die Werkstücke 3, 4 angeordnet werden.

In Fig. 1 ist der Zustand während des Nietvorgangs dargestellt. Das Werkzeug 10 mit eingelegtem Befestigungselement 5, 19 steht senkrecht zu den Werkstücken 3, 4. Bei Betätigung des Startschalters 14 wird der Niet 5 deformiert und verbindet die Werkstücke 3, 4 miteinander, wobei der andere Abschnitt 19 des Befestigungselements 5, 19, der Nietdorn, vom Niet 5 abgerissen wird, wie zuvor beschrieben.

Um sicherzustellen, dass der abgerissene Nietdorn vom Werkzeugelement 18 in den Behälter 22 befördert werden kann, sind der Kraftsensor 20 und die Trapez- oder Umlaufspindel 21 jeweils mit der genannten Durchführung ausgestattet. Die Durchführung kann beispielsweise eine Bohrung sein.

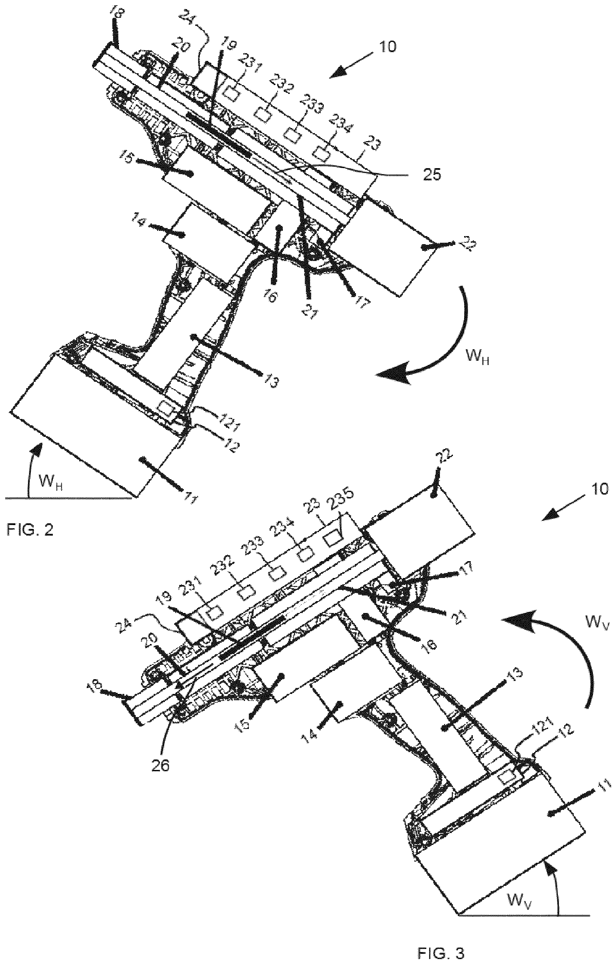

Fig. 2 zeigt, wie sich der vom Niet 5 abgerissenen Abschnitt des Befestigungselements 19 nach einem Nietvorgang in Richtung des Behälters 22 bewegt. Hierfür wird das Werkzeug 10 nach dem Nietvorgang um einen Drehwinkel WH um eine vorbestimmte Achse gedreht. Dadurch kann der Abschnitt des Befestigungselements 19, der Nietdorn, vom Werkzeugelement 18 entlang der Richtung des mit dem Bezugszeichen 25 bezeichneten Pfeils durch die Durchführung des Kraftsensors 20 und der Trapez- oder Kugelumlaufspindel 21 in den Behälter 22 abgleiten. Der in Fig. 2 dargestellte Drehwinkel W_{H} entspricht dem vorbestimmten Drehwinkel 234, bei welchem das Abgleiten des Abschnitts des Befestigungselements 19, des Nietdorns, in den Behälter 22 sichergestellt ist.

Der Drehwinkel W_{H} des Werkzeugs 10 wird von der Erfassungseinrichtung 232 erfasst, welche beispielsweise ein Beschleunigungssensor ist. Dabei erfasst die Erfassungseinrichtung 232 einen Drehwinkel W_{H}, mit welchem das Werkzeug 10 im Raum angeordnet ist.

Wird das Werkzeug 10 nach einem Nietvorgang nicht oder nur teilweise mit dem Drehwinkel WH oder in einer anderen Richtung angeordnet, weicht der von der Erfassungseinrichtung 232 erfasste Drehwinkel WH des Werkzeugs 10 von dem in der Steuereinrichtung 23 gespeicherten vorbestimmten Drehwinkel 234 ab. Daher ergibt eine Auswertung der Steuereinrichtung 23, dass der nächste Nietvorgang nicht freigegeben werden darf. Das heißt, auch bei Betätigung des Startschalters 14 des Werkzeugs 10, beispielsweise durch einen Benutzer des Werkzeugs, erfolgt kein Nietvorgang mit dem Werkzeug 10. Noch dazu kann mit der Anzeigeeinrichtung 233 eine Warnung, beispielsweise ein visuelles Signal, ein akustisches Signal, eine Vibration am Werkzeug 10, etc., ausgegeben werden, wenn das Werkzeug 10 nach Behandlung des Werkstücks 3, 4 nicht um den vorbestimmten Drehwinkel 234 gedreht wurde.

Zusätzlich kann von einem Benutzer mit Hilfe der Eingabeeinrichtung 24 ein anderer bzw. geänderter vorbestimmter Drehwinkel 234 eingegeben werden. Der vorbestimmte Drehwinkel 234 kann somit parametriert werden und ist nicht nur ab Werk voreingestellt. Hierbei ist es jedoch vorzuziehen, dass der vorbestimmte Drehwinkel 234 einen derartigen Wert hat, dass der Abschnitt 19 des Befestigungselements 5, 19 nach einer Behandlung des Werkstücks 3, 4 mit dem Werkzeug 10 sicher in den Behälter 22 abgleiten kann. Das Werkzeug 10 wird somit nach einer Behandlung des Werkstücks 3, 4 immer im optimalen Drehwinkel WH im Raum angeordnet, um einen neuen Nietvorgang ohne Beschädigung des Werkzeugs 10 freizugeben.

Somit kann die notwendige Verkippung des Werkzeugs 10 parametriert werden, wobei der Mindestdrehwinkel um den das Gerät zwischen den Nietvorgängen nach hinten gekippt werden muss, eingestellt wird.

Dadurch wird mit dem Werkzeug 10, genauer gesagt seiner Steuereinrichtung 23, eine Auswertung der Signale der Erfassungseinrichtung so vorgenommen, dass zwischen zwei Nietsetzvorgängen das Werkzeug 10 sicher einmal nach hinten gekippt wird. Die Freigabe des folgenden Nietstarts erfolgt also nur nach vorherigem Kippen des Werkzeugs 10 zum sicheren Abführen des Nietdorns bzw. Abschnitts 19.

Fig. 3 zeigt eine Position des Werkzeugs 10 zur Veranschaulichung eines zweiten Ausführungsbeispiels des Werkzeugs 10. Wie in Fig. 3 gezeigt, kann es vorkommen, dass das Werkzeug 10 nach dem Nietvorgang, beispielsweise um einen Drehwinkel WV nach vorne gedreht wird. Dabei bewegt sich der Abschnitt 19 des Befestigungselements 5, 19 nach einem Nietvorgang in die Richtung eines Pfeils 26 aus dem Werkzeugelement 18 des Werkzeugs 10 heraus. Dies hat zur Folge, dass der Abschnitt 19, der Nietdorn, nicht in den Behälter 22 gelangt, sondern neben das Werkzeug 10 fällt Um dies zu vermeiden, ist bei dem vorliegenden Ausführungsbeispiel ein zweiter vorbestimmter Drehwinkel 235 in der Steuereinrichtung 23 gespeichert. Der zweite vorbestimmte Drehwinkel 235 ist derart gewählt, dass ein Abgleiten des Abschnitts 19, des Nietdorns, wie in Fig. 3 gezeigt, verhindert wird. Der zweite vorbestimmte Drehwinkel 235 hat also einen kleineren Wert als der in Fig. 3 gezeigte Drehwinkel WV.

Erfasst die Erfassungseinrichtung 232 bei dem vorliegenden Ausführungsbeispiel nach einer Behandlung des Werkstücks 3, 4 eine Drehbewegung des Werkzeugs 10 um den zweiten vorbestimmten Drehwinkel 235, ohne dass zuvor das Befestigungselement 19 in den Behälter 22 abgeführt wurde, wird von der Steuereinrichtung 23 ein Signal an die Anzeigeeinrichtung 233 ausgegeben. Infolgedessen wird mit der Anzeigeeinrichtung 233 am Werkzeug 10 ein Warnsignal, beispielsweise ein visuelles Signal, ein akustisches Signal, eine Vibration am Werkzeug 10, etc., angezeigt, um den Benutzer des Werkzeugs 10 zu warnen. Die Anzeigeeinrichtung 233 zeigt also an, ob das Werkzeug 10 nach Behandlung eines Werkstücks 3, 4) um den vorbestimmten zweiten Drehwinkel 235 gedreht wird, bei welchem der Abschnitt 19 bei weiterem Überschreiten des vorbestimmten zweiten Drehwinkels 235 aus dem Werkzeug 10 fallen kann.

Somit wird dem Benutzer des Werkzeugs 10 deutlich gemacht, dass er das Werkzeug 10 nach hinten kippen muss, um ein eventuelles Herausfallen des Abschnitts 19 bzw. Nietdorns nach vorne zu verhindern.

Auch der zweite vorbestimmte Drehwinkel 235 kann mit Hilfe der Eingabeeinrichtung 24 parametriert werden. Damit kann der zweite vorbestimmte Drehwinkel 235 auch vom Benutzer beliebig gewählt werden.

Ansonsten ist das Werkzeug 10 gemäß dem vorliegenden Ausführungsbeispiel ausgeführt, wie bei dem ersten Ausführungsbeispiel beschrieben.

Mit dem vorliegenden Ausführungsbeispiel ist es also möglich zu bestimmen, wann in Bezug auf das Abführen des Abschnitts 19 des Befestigungselements 5, 19 ein Warnsignal auszugeben ist. Dadurch wird nicht bei jeder kleinen Drehbewegung des Werkzeugs 10 nach einer Behandlung eines oder mehrerer Werkstücke 3, 4 in eine andere Richtung als nach hinten ein Warnsignal am Werkzeug 10 ausgelöst.

Alle zuvor beschriebenen Ausgestaltungen des Werkzeugs 10 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert oder auch weggelassen werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Es können auch mehr als zwei vorbestimmte Drehwinkel 234, 235 in der Steuereinrichtung 23 oder in einer weiteren, nicht dargestellten Speichereinrichtung gespeichert werden. Beispielsweise können dadurch auch mehrere Stufen eingebaut werden, gemäß welchen der Benutzer gewarnt wird, um sowohl ein sicheres Abgleiten des Nietdorns bzw. des Abschnitts 19 aus dem Werkzeugelement 18 als auch in den Behälter 22 sicherzustellen.

Das Werkzeug 10 kann jedoch auch ein anderes Werkzeug als ein Nietwerkzeug sein, bei welchem anderen Werkzeug das Werkzeug nach der Behandlung des Werkstücks 3, 4 und vor der nächsten Behandlung eines Werkstücks 3, 4 von seiner Position bei der Behandlung des Werkstücks 3, 4 in eine andere Position als bei der Behandlung des Werkstücks 3, 4 angeordnet werden sollte. Beispielsweise kann das Werkzeug 10 auch ein Stanzwerkzeug sein, usw..

Bei dem Werkzeug 10 gemäß dem ersten Ausführungsbeispiel ist die Anzeigeeinrichtung 233 optional also nicht zwingend erforderlich.

Die Eingabeeinrichtung 24 ist nicht zwingend erforderlich. Die Eingabeeinrichtung 24 kann insbesondere auch an einer zentralen Stelle vorgesehen sein und für mehrere Werkzeuge der Fertigungsanlage 1 zum Einsatz kommen.

## Patentansprüche

1. Werkzeug (10), mit
einem Werkzeugelement (18) zur Behandlung eines Werkstücks (3; 3, 4),
einer Steuereinrichtung (23) zur Auswertung eines von einer Erfassungseinrichtung (232) erfassten Drehwinkels (W_{H}; W_{V}, W_{H}), mit welchem das Werkzeug (10) im Raum angeordnet ist, nachdem eine Behandlung des Werkstücks (3; 3, 4) mit dem Werkzeugelement (18) ausgeführt wurde, und zur Freigabe der Steuerung des Werkzeugs (10) abhängig davon, ob das Werkzeug (10) nach der Behandlung des Werkstücks (3; 3, 4) mit einen vorbestimmten Drehwinkel (234) im Raum angeordnet wurde, und
mit einem Behälter (22) zur Aufnahme eines Abschnitts (19) eines vom Werkzeugelement (18) gehaltenen Befestigungselements (5, 19), welcher Abschnitt (19) aufgrund einer Behandlung des Werkstücks (3; 3, 4) mit dem Werkzeugelement (18) entsteht, wobei der Behälter in dem Werkzeug derart angeordnet ist, dass eine Anordnung des Werkzeugs (10) mit dem vorbestimmten Drehwinkel (234) im Raum nach einer Behandlung des Werkstücks (3; 3, 4) ein Bewegen des Abschnitts (19) in den Behälter (22) bewirkt.

2. Werkzeug (10) nach Anspruch 1,
zudem mit einem Startschalter (14) zum Starten einer Behandlung des Werkstücks (3; 3, 4) mit dem Werkzeugelement (18),
wobei die Steuereinrichtung (23) zur Freigabe eines Schaltens des Startschalters (14) abhängig von dem Ergebnis der Auswertung ausgestaltet ist.

3. Werkzeug (10) nach einem der vorangehenden Ansprüche, zudem mit einer Eingabeeinrichtung (24) zur Parametrierung des vorbestimmten Drehwinkels (234; 235).

4. Werkzeug (10) nach einem der vorangehenden Ansprüche,
zudem mit einer Erfassungseinrichtung (232) zur Erfassung eines Drehwinkels (W_{V}, W_{H}), um den das Werkzeug (10) nach einer Behandlung des Werkstücks (3; 3, 4) gedreht wurde, und/oder
zudem mit einer Anzeigeeinrichtung (233) zur Anzeige der von der Erfassungseinrichtung (232) erfassten Werte.

5. Werkzeug (10) nach Anspruch 5, wobei die Erfassungseinrichtung (232) einen Beschleunigungssensor aufweist.

6. Werkzeug (10) nach Anspruch 5, wobei die Anzeigeeinrichtung zur Ausgabe einer Warnung ausgestaltet ist, wenn das Werkzeug (10) nach der Behandlung eines Werkstücks (3; 3, 4) nicht um den vorbestimmten Drehwinkel (234) gedreht wurde und/oder das Werkzeug (10) nach Behandlung eines Werkstücks (3; 3, 4) um einen vorbestimmten zweiten Drehwinkel (235) gedreht wird, bei welchem der Abschnitt (19) bei weiterem Überschreiten des vorbestimmten zweiten Drehwinkels (235) aus dem Werkzeug (10) fallen kann.

7. Werkzeug (10) nach einem der vorangehenden Ansprüche, wobei das Werkzeug (10) ein Nietwerkzeug ist, und/oder wobei das Werkzeugelement (18) zur Aufnahme eines Blindnietdorns ausgestaltet ist.

8. Fertigungsanlage (1) zur Fertigung von Gegenständen (2) aus mindestens einem Werkstück (3; 3, 4), mit
mindestens einem Werkzeug (10) nach einem der vorangehenden Ansprüche, wobei das Werkzeug (10) zur Behandlung des Werkstücks (3; 3, 4) zum Einsatz kommt.

9. Verfahren zur Behandlung eines Werkstücks (3; 3, 4) mit einem Werkzeugelement (18) eines Werkzeugs (10), mit den Schritten
Erfassen, mit einer Erfassungseinrichtung (18), eines Drehwinkels (W_{H}; W_{V}, W_{H}), mit dem das Werkzeug (10) nach einer Behandlung des Werkstücks (3; 3, 4) im Raum angeordnet ist, nachdem eine Behandlung mit dem Werkzeugelement (18) ausgeführt wurde, wobei das Werkzeug einen Behälter aufweist, in welchen ein Abschnitt (19) eines vom Werkzeugelement (18) gehaltenen Befestigungselements (5, 19) aufgenommen wird, welcher Abschnitt (19) aufgrund einer Behandlung des Werkstücks (3; 3, 4) mit dem Werkzeugelement (18) entsteht, wobei eine Anordnung des Werkzeugs (10) mit dem vorbestimmten Drehwinkel (234) im Raum nach einer Behandlung des Werkstücks (3; 3, 4) ein Bewegen des Abschnitts (19) in den Behälter (22) bewirkt,
Auswerten, mit einer Steuereinrichtung (23) des Werkzeugs (10), des von der Erfassungseinrichtung (232) erfassten Drehwinkels (W_{H}; W_{V}, W_{H}), und
Freigeben, mit der Steuereinrichtung (23), der Steuerung des Werkzeugs (10), abhängig davon, ob das Werkzeug (10) nach der Behandlung des Werkstücks (3; 3, 4) mit einem vorbestimmten Drehwinkel (234) im Raum angeordnet wurde.

## Claims

1. Tool (10) having
a tool element (18) for processing a workpiece (3; 3, 4),
a control device (23) for evaluating a rotation angle (W_{H}; W_{V}, W_{H}) which is detected by a detection device (232) and with which the tool (10) is arranged in space, after a processing operation of the workpiece (3; 3, 4) has been carried out with the tool element (18), and for releasing the control of the tool (10) in a manner dependent on whether the tool (10) has been arranged in space with a predetermined rotation angle (234) after the workpiece (3; 3, 4) has been processed, and
having a container (22) for receiving a portion (19) of a fixing element (5, 19) which is retained by the tool element (18), which portion (19) is produced as a result of the workpiece (3; 3, 4) being processed with the tool element (18), wherein the container is arranged in the tool in such a manner that an arrangement of the tool (10) with the predetermined rotation angle (234) in space after the workpiece (3; 3, 4) has been processed brings about a movement of the portion (19) into the container (22).

2. Tool (10) according to Claim 1,
further having a start switch (14) for starting a processing operation of the workpiece (3; 3, 4) with the tool element (18),
wherein the control device (23) is constructed to release a switching operation of the start switch (14) in a manner dependent on the result of the evaluation.

3. Tool (10) according to either one of the preceding claims, further having an input device (24) for parameterising the predetermined rotation angle (234; 235) .

4. Tool (10) according to any one of the preceding claims,
further having a detection device (232) for detecting a rotation angle (W_{V}, W_{H}), through which the tool (10) has been rotated after a processing operation of the workpiece (3; 3, 4), and/or
further having a display device (233) for displaying the values detected by the detection device (232).

5. Tool (10) according to Claim 5, wherein the detection device (232) has an acceleration sensor.

6. Tool (10) according to Claim 5, wherein the display device is constructed for outputting a warning if the tool (10) has not, after a workpiece (3; 3, 4) has been processed, been rotated through the predetermined rotation angle (234) and/or if the tool (10) has not, after a workpiece (3; 3, 4) has been processed, been rotated through a predetermined second rotation angle (235), at which the portion (19) can fall out of the tool (10) if the predetermined second rotation angle (235) is further exceeded.

7. Tool (10) according to any one of the preceding claims, wherein the tool (10) is a riveting tool and/or wherein the tool element (18) is constructed to receive a blind mandrel.

8. Production installation (1) for producing objects (2) from at least one workpiece (3; 3, 4), having at least one tool (10) according to any one of the preceding claims, wherein the tool (10) is used to process the workpiece (3; 3, 4).

9. Method for processing a workpiece (3; 3, 4) with a tool element (18) of a tool (10), having the steps of detecting, with a detection device (18), a rotation angle (W_{H}; W_{V}, W_{H}), with which the tool (10) is arranged in space after the workpiece (3; 3, 4) has been processed, after a processing operation with the tool element (18) has been carried out, wherein the tool comprises a container, in which a portion (19) of a fixing element (5, 19) which is retained by the tool element (18) is received, which portion (19) is produced as a result of the workpiece (3; 3, 4) being processed with the tool element (18), wherein an arrangement of the tool (10) with the predetermined rotation angle (234) in space after the workpiece (3; 3, 4) has been processed brings about a movement of the portion (19) in the container (22),
evaluating, with a control device (23) of the tool (10), the rotation angle (W_{H}; W_{V}, W_{H}) which is detected by the detection device (232), and
releasing, with the control device (23), the control of the tool (10) in a manner dependent on whether the tool (10) has been arranged in space with a predetermined rotation angle (234) after the workpiece (3; 3, 4) has been processed.

## Revendications

1. Outil (10), comprenant
un élément d'outil (18) servant au traitement d'une pièce (3 ; 3, 4),
un dispositif de commande (23) servant à l'évaluation d'un angle de rotation (W_{H} ; W_{V}, W_{H}) détecté par un dispositif de détection (232), angle de rotation suivant lequel l'outil (10) est disposé dans l'espace, après qu'un traitement de la pièce (3 ; 3, 4) à l'aide de l'élément d'outil (18) a été réalisé, et servant à l'autorisation de la commande de l'outil (10) selon que l'outil (10) a été disposé ou non suivant un angle de rotation prédéfini (234) dans l'espace après le traitement de la pièce (3 ; 3, 4), et
un récipient (22) servant à recevoir une partie (19) d'un élément de fixation (5, 19) retenu par l'élément d'outil (18), laquelle partie (19) est produite en raison d'un traitement de la pièce (3 ; 3, 4) à l'aide de l'élément d'outil (18), le récipient étant disposé dans l'outil de telle sorte qu'un agencement de l'outil (10) suivant l'angle de rotation prédéfini (234) dans l'espace après un traitement de la pièce (3 ; 3, 4) provoque un déplacement de la partie (19) dans le récipient (22) .

2. Outil (10) selon la revendication 1,
comprenant en outre un commutateur de démarrage (14) servant au démarrage d'un traitement de la pièce (3 ; 3, 4) à l'aide de l'élément d'outil (18),
le dispositif de commande (23) étant configuré pour autoriser une commutation du commutateur de démarrage (14) de manière indépendante du résultat de l'évaluation.

3. Outil (10) selon l'une quelconque des revendications précédentes, comprenant en outre un dispositif d'entrée (24) servant au paramétrage de l'angle de rotation prédéfini (234 ; 235).

4. Outil (10) selon l'une quelconque des revendications précédentes,
comprenant en outre un dispositif de détection (232) servant à la détection d'un angle de rotation (W_{V}, W_{H}) suivant lequel l'outil (10) a été tourné après un traitement de la pièce (3 ; 3, 4), et/ou comprenant en outre un dispositif d'affichage (233) servant à l'affichage des valeurs détectées par le dispositif de détection (232).

5. Outil (10) selon la revendication 5, le dispositif de détection (232) comprenant un capteur d'accélération.

6. Outil (10) selon la revendication 5, le dispositif d'affichage étant configuré pour émettre un avertissement lorsque l'outil (10) n'a pas, après le traitement d'une pièce (3 ; 3, 4), été tourné de l'angle de rotation prédéfini (234) et/ou lorsque l'outil (10) a été, après le traitement d'une pièce (3 ; 3, 4), tourné d'un deuxième angle de rotation prédéfini (235), pour lequel la partie (19) peut tomber de l'outil (10) en cas de dépassement supplémentaire du deuxième angle de rotation prédéfini (235).

7. Outil (10) selon l'une quelconque des revendications précédentes, l'outil (10) étant un outil à river, et/ou l'élément d'outil (18) étant configuré pour recevoir un mandrin à rivet borgne.

8. Installation de production (1) servant à la production d'objets (2) à partir d'au moins une pièce (3 ; 3, 4), comprenant
au moins un outil (10) selon l'une quelconque des revendications précédentes, l'outil (10) étant utilisé pour le traitement de la pièce (3 ; 3, 4).

9. Procédé de traitement d'une pièce (3 ; 3, 4) à l'aide d'un élément d'outil (18) d'un outil (10), le procédé comprenant les étapes consistant à détecter, à l'aide d'un dispositif de détection (18), un angle de rotation (W_{H} ; W_{V}, W_{H}) suivant lequel l'outil (10) est disposé dans l'espace après un traitement de la pièce (3 ; 3, 4), après qu'un traitement à l'aide de l'élément d'outil (18) a été réalisé, l'outil comprenant un récipient dans lequel une partie (19) d'un élément de fixation (5, 19) retenu par l'élément d'outil (18) est reçue, laquelle partie (19) est produite en raison d'un traitement de la pièce (3 ; 3, 4) à l'aide de l'élément d'outil (18), un agencement de l'outil (10) suivant l'angle de rotation prédéfini (234) dans l'espace après un traitement de la pièce (3 ; 3, 4) provoquant un déplacement de la partie (19) dans le récipient (22),
évaluer, à l'aide d'un dispositif de commande (23) de l'outil (10), l'angle de rotation (W_{H} ; W_{V}, W_{H}) détecté par le dispositif de détection (232), et autoriser, à l'aide du dispositif de commande (23), la commande de l'outil (10) selon que l'outil (10) a été disposé ou non suivant un angle de rotation prédéfini (234) dans l'espace après le traitement de la pièce (3 ; 3, 4).
